# EUROPÄISCHE PATENTSCHRIFT

(11) **EP 0 667 180 B1**
(45) Veröffentlichungstag und Bekanntmachung des Hinweises auf die Patenterteilung: **31.03.1999**
(21) Anmeldenummer: 95100922.4
(22) Anmeldetag: 24.01.1995
(51) Int. Cl.: B01D 53/70, B01D 53/86, A62D 3/00

(54) **Verfahren zur Entsorgung von halogenierten Kohlenwasserstoffen**
Process for the disposal of halogenated hydrocarbons
Procédé pour l'élimination des hydrocarbures halogénés

(30) Priorität: 11.02.1994 DE 4404329
(43) Veröffentlichungstag der Anmeldung: 16.08.1995
(73) Patentinhaber: CS-GmbH Halbleiter- und Solartechnologie, D-85737 Ismaning (DE)
(72) Erfinder: Scholz, Christoph, Dr., D-83666 Waakirchen (DE); Holzinger, Walter, Dr., D-82041 Deisenhofen (DE); Schlögl, Robert, Prof. Dr., D-14195 Berlin (DE)
(74) Vertreter: Haft, von Puttkamer, Berngruber, Czybulka

(56) Entgegenhaltungen:
- EP-A- 0 188 718
- EP-A- 0 361 385
- EP-A- 0 387 417
- EP-A- 0 451 006
- DE-A- 3 443 722
- DE-A- 3 735 245
- US-A- 4 912 070
- US-A- 5 118 492
- DATABASE WPI Section Ch, Week 9502 Derwent Publications Ltd., London, GB; Class E16, AN 95-009424 & JP-A-06 293 501 (DOWA MINING CO LTD) , 21.Oktober 1994
- PATENT ABSTRACTS OF JAPAN vol. 013 no. 447 (C-642) ,6.Oktober 1989 & JP-A-01 172229 (TODA KOGYO CORP) 7.Juli 1989,

## Beschreibung

Die Erfindung bezieht sich auf ein Verfahren zur Entsorgung von ozonabbauenden (ODP) und/oder klimawirksamen (GWP) halogenierten Verbindungen nach dem Oberbegriff des Anspruchs 1.

Fluorochlorkohlenwasserstoffe (FCKW), Fluorokohlenwasserstoffe (FKW) und Chlorkohlenwasserstoffe CKW werden seit über 50 Jahren als Treibmittel, Kältemittel, Bläh- und Trennmittel, Feuerlöschmittel sowie Löse- und Reinigungsmittel in großem Umfang eingesetzt.

Nachdem sich der Verdacht erhärtete, daß FCKW, FKW und CKW maßgeblich am Abbau der Ozonschicht in der Stratosphäre beteiligt sind und den Treibhauseffekt wesentlich verstärken, wurde 1987 im Abkommen von Montreal eine Reduzierung der Produktion und des Einsatzes bestimmter FCKW bis 1999 um 50% vereinbart. Im Folgeabkommen von London 1990 wurde diese Vereinbarung auf ein 100%iges Verbot aller FCKW, FKW und CKW bis zum Jahr 2000 verschärft.

Nach Schätzungen sind gegenwärtig weltweit mehr als 2 Millionen Tonnen FCKW in Isolierschäumen, Kälteanlagen und in Form gebunkerter Vorräte im Umlauf. Zur Entsorgung dieser Bestände wird die Hochtemperatur-Spaltung in der Knallgasflamme angewendet. So werden nach der Literaturstelle: "Recycling of CFCs" in "Uhde Engineering News" 11/1992 FCKW in einer Sauerstoff/Wasserstoff-Flamme bei einer Temperatur von ca. 2000°C zu Flußsäure, Kohlendioxid, Salzsäure und Chlor zerlegt. Diese hohe Verbrennungstemperatur ist für eine quantitative Zerlegung unerläßlich. So ist z.B. bei Verwendung von Luft anstelle von Sauerstoff oder Methan anstelle von Wasserstoff eine quantitative Zerlegung nicht mehr möglich. Abgesehen davon, würde die Verwendung von Luft bzw. Methan zu einem entsprechend hohen NOₓ- bzw. CO₂-Ausstoß führen. Mit Hilfe von nachgeschalteten Filmreaktoren wird bei dem bekannten Verfahren aus den Verbrennungsprodukten 50%ige Flußsäure und 30%ige Salzsäure gewonnen. In einer letzten Gaswäscherstufe werden Spuren von Säuren und Chlor gebunden. Das emittierte Abgas enthält CO₂, Sauerstoff und NOₓ.

Trotz des hohen Wirkungsgrades von annähernd 100% und der Produktion an sich wiederverwertbarer Spaltprodukte, wie Flußsäure und Salzsäure, haben die Verbrennungsverfahren immanente Nachteile. So ist der Energiebedarf insbesondere zur Erzeugung des zur Verbrennung verwendeten Wasserstoffs und Sauerstoffs beträchtlich, zumal dieser hohe Energiebedarf einen entsprechend hohen Primärenergie-Einsatz und damit ein entsprechend hohes CO₂-Äquivalent bei Einsatz fossiler Energieträger bedingt.

Auch ist der Bedarf nach Flußsäure, das bei diesem Verfahren gebildet wird, begrenzt und der Bedarf nach Salzsäure ist ebenfalls durch den Rückgang der Produktion chlorhaltiger Produkte im Abnehmen begriffen. Ein Großteil der Flußsäure und der Salzsäure muß daher gebunden und dann deponiert werden. Weiterhin sind die Verbrennungsverfahren, da sie für eine quantitative Umsetzung hohe Verbrennungstemperaturen und stabile Verbrennungsbedingungen benötigen, nur im kontinuierlichen Betrieb, also nur bei großen Durchsätzen von mehreren Tausend Jahrestonnen wirtschaftlich zu betreiben. Eine Entsorgung kleinerer FCKW-Mengen, etwa von FCKW-Kühlmitteln aus Kühlschränken, würde daher den Aufbau eines umfangreichen FCKW-Sammelsystems voraussetzen, um eine solche Verbrennungsanlage kontinuierlich betreiben zu können.

Halogenierte Kohlenwasserstoffe, also insbesondere FCKW, FKW und CKW, weisen ein hohes ODP (ozone depletion potential) auf. Die außerordentlich lange Lebenszeit dieser Stoffe bedingt eine hohe Anreicherung in der Atmosphäre, die im Hinblick auf die Klimawirksamkeit dieser Stoffe (IR-Absorptionen im atmosphärischen Fenster) den Treibhauseffekt verstärkt. Neben dem ODP besitzen diese Stoffe also auch ein GWP (greenhouse warming potential). Durch ein hohes GWP zeichnen sich auch perfluorierter Stickstoff sowie Schwefel aus, d. h. Stickstofftrifluorid (NF₃) und Schwefelhexafluorid (SF₆).

Aus EP-A-0 188 718 ist ein Verfahren zur Entsorgung von Halogenkohlenwasserstoffen durch thermische Zersetzung bei 600°C bis 800°C mit Calciumoxid bekannt, das in einem mindestens zweifachen stöchiometrischen Überschuß angewendet wird, um das entstehende Halogen zu binden.

Aus US-A-5,118,492 ist ein Verfahren zur Entsorgung von FCKW bekannt, bei dem die FCKW bei einer Temperatur oberhalb 300°C durch ein Festbett aus einem Aktivkohleträger und einem Eisenoxidkatalysator in Gegenwart von Dampf geleitet werden. Durch diese Behandlung werden die FCKW zu Säuren, wie HCl und HF sowie zu dem toxischen Trifluor- bzw. Trichloressigsäurechlorid bzw. -fluorid zersetzt, so dass eine weitere Gasreinigung durchgeführt werden muß.

Aufgabe der Erfindung ist es, ein Verfahren bereitzustellen, mit dem halogenierte Verbindungen, die ozonabbauend und/oder klimawirksam sind, auch in kleineren Mengen wirtschaftlich entsorgt werden können.

Dies wird erfindungsgemäß durch das im Anspruch 1 angegebene Verfahren erreicht.

Der Anteil des Eisenoxids, Eisenoxyhydroxids, Eisenhydroxysalzes bzw. Eisenoxyhydroxysalzes kann lediglich 1 Gew.% des Sorbens ausmachen und bis zu 80 Gew.-% betragen, vorzugsweise beträgt der Gehalt dieser Eisenverbindungen jedoch 3 bis 60 Gew.%.

Als Eisenoxyhydroxid ist insbesondere Goethit (α-FeOOH) geeignet, als Eisenoxid Ferrihydrit (Fe₂O₃±2FeOOH·2,6H₂O), Maghemit (γ-Fe₂O₃), Magnetit (Fe₃O₄) und Hämatit (α-Fe₂O₃).

Ein Gemisch aus Goethit und Ferrihydrit, gegebenenfalls mit Hämatit und/oder Maghemit, hat sich als besonders geeignet erwiesen.

Jedoch können auch andere Eisenoxyhydroxide, wie Akaganeit, Lepidokrit oder Feroxyhyt, eingesetzt werden. Grundsätzlich werden Eisenoxide bzw. Eisenoxyhydroxide mit einem Anteil an Fe²+, bevorzugt, da sie durch ihre reduzierenden Eigenschaften zu einer besonders hohen Sorptionsfähigkeit führen.

Ferner können Eisenhydroxysalze, wie Eisenhydroxychlorid, -sulfat und/oder -carbonat sowie Eisenoxyhydroxysalze, wie Eisenoxyhydroxysulfat, in dem Sorbens enthalten sein.

Die erwähnten Eisenoxide bzw. Eisenoxyhydroxide können mit Metallen der Gruppe IIIa, IIb, IVb, VIb, VIIb und VIIIb des Periodensystems dotiert sein, insbesondere mit Aluminium, Mangan, Chrom, Nickel, Titan, Kobalt, Kupfer und/oder Zink. In dem Eisenoxid bzw. Eisenoxyhydrid kann das Eisen auch teilweise durch Ionenaustausch durch ein anderes Metall der erwähnten Gruppen des Periodensystems ersetzt sein. So kann beispielsweise in Goethit das Eisen durch Aluminium, Mangan und/oder Chrom ersetzt werden.

Das feste Sorbens liegt vorzugsweise als Feststoffbett vor. Es kann in einem Behälter enthalten sein, der mit einer verschließbaren Einlaßöffnung an einem und mit einer verschließbaren Auslaßöffnung am anderen Ende versehen ist. Der Behälter kann beispielsweise entsprechend der DE 41 02 969 C1 aufgebaut sein.

Das Sorbens enthält ein Phyllosilikat, und zwar in einem Anteil von mindestens 10 Gew.%, vorzugsweise mindestens 50 Gew.%. Das Phyllosilikat ist dabei nicht nur ein mineralischer Träger für die Eisen-Verbindung, sondern nimmt aktiv an der Sorption teil, führt also zu einer wesentlichen Erhöhung der Sorptionsfähigkeit des Sorbens.

Als Phyllosilikate können nach dem erfindungsgemäßen Verfahren insbesondere Minerale der Montmorin-Gruppe, also vor allem Bentonite und damit eng verwandte Ton-Materialien, wie Montmorillonit, Nontronit, Saponit oder Vermicullit, eingesetzt werden, ferner Talk und Minerale der Glimmer-Gruppe, wie Muskovit, Biotit, Illit, Phlogopit, Lepidolith, Margarit, Paragonit oder Chloritoid. Jedoch können auch Kaoline, wie Kaolin oder Chamosit, sowie Serpentin-Mineralien, wie Serpentin, Meerschaum, Garnierit oder Halloysit, zum Einsatz kommen.

Das erfindungsgemäße Verfahren wird im allgemeinen in einem Temperaturbereich zwischen 100 und 500°C durchgeführt, insbesondere zwischen 150 und 450°C. Das erfindungsgemäße Verfahren wird vorzugsweise bei Atmosphärendruck durchgeführt. Es kann jedoch auch mit Unterdruck oder mit einem Druck von beispielsweise bis zu 20 bar durchgeführt werden.

Die Sorptionsfähigkeit des festen Sorbens in bezug auf FCKW wird im allgemeinen erhöht und/oder die zur Sorption erforderliche Temperatur kann im allgemeinen gesenkt werden, wenn die natürlichen Phyllosilikate modifiziert werden, beispielsweise durch eine Säure-Behandlung oder durch Ionenaustausch. So kann beispielsweise die FCKW-Sorptionsfähigkeit von Bentoniten durch Ionenaustausch mit einem Metall der Gruppe Ia, IIa, IIIa, Ib, IIb, VIb, VIIb oder VIIIb des Periodensystems oder mit quarternären Ammoniumsalzen erhöht werden. Auch läßt sich die Sorptionsfähigkeit im allgemeinen durch Interkalation, also Einlagerung von Kationen von Metallen der Gruppe Ia, IIa, IIIa, Ib, IIb, VIb, VIIb und VIIIb des Periodensystems zwischen den Schichtgitterebenen der Phyllosilikate steigern, also durch Bildung sogenannter "Pillared Clays", als Metall-Kationen sind insbesondere Hydroxy-Al-Kationen, Hydroxy-Fe(III)-Kationen sowie Gemische von Hydroxy-Fe(III)-Kationen und Hydroxy-Al-Kationen geeignet, ferner Phenanthrolin-Fe(II)-Kationen und trinukleare Fe(II)-Acetato-Kationen.

Eine Erhöhung der Sorptionsfähigkeit des Sorbens in bezug auf die zu entsorgenden halogenierten Verbindungen bzw. eine Herabsetzung der zur Sorption erforderlichen Temperatur wird bei dem erfindungsgemäßen Verfahren also dadurch erzielt, daß das Sorbens neben dem Eisenoxid, Eisenoxyhydroxid, Eisenhydroxysalz bzw. Eisenoxyhydroxysalz ein Phyllosilikat enthält. Dabei können natürliche Phyllosilikate verwendet werden, die einen hohen Eisenoxid- bzw. Eisenoxyhydroxid-Anteil aufweisen, oder das Eisenoxid bzw. Eisenoxyhydroxid kann nachträglich gebildet werden. Auch kann das Eisenoxid oder Eisenoxyhydroxid, einschließlich der Salze desselben, im Gemenge mit dem Phyllosilikat vorliegen. Es kann ferner z.B. durch Interkalation in das Phyllosilikat eingebracht sein.

Neben dem Phyllosilikat und den erwähnten Eisenverbindungen kann das Sorbens ferner ein Carbonat und/oder ein Sulfat von Metallen der Gruppe IIa des Periodensystems enthalten, und zwar in einer Menge bis zu 30 Gew.%, vorzugsweise bis zu 15 Gew.%. Das Carbonat kann beispielsweise Calcium- oder Magnesiumcarbonat oder Dolomit (CaMg(CO₃)₂) sein, das Sulfat beispielsweise Calciumsulfat.

Die zu entsorgenden halogenierten Verbindungen werden dem festen, auf mindestens 100°C erwärmten Sorbens als Dampf, gegebenenfalls mit einem Trägergas, wie Stickstoff, zugeführt, und zwar mit einer Raumgeschwindigkeit von vorzugsweise höchstens 1000 h-¹ (Gesamtvolumenstrom [l/h] /Katalysatorvolumen [l]).

Bei dem erfindungsgemäßen Verfahren werden die zu entsorgenden halogenierten Verbindungen quantitativ und irreversibel von dem festen Sorbens gebunden. Es entstehen auch keine Zersetzungs- oder Reaktionsprodukte, die nicht gebunden werden, abgesehen von Wasser. Auch wenn das Sorbens gesättigt ist, werden keine Zersetzungs- oder Reaktionsprodukte abgegeben. Bei Sättigung des Sorbens kann die austretende halogenierte Verbindung daher beispielsweise mit einem nachgeschalteten Festbett mit dem Sorbens gebunden werden, also beispielsweise einem weiteren, mit dem festen Sorbens gefüllten Behälter nach der DE 41 02 969 C1.

Da das erfindungsgemäße Verfahren bei erhöhter Temperatur durchgeführt wird, dürfte eine chemische Reaktion am Sorbens erfolgen, möglicherweise unter Spaltung der halogenierten Verbindung. Eine Desorption ist jedoch auch bei hoher Temperatur nicht zu beobachten.

Sowohl das unbeladene als auch das mit der entsorgten halogenierten Verbindung beladene Sorbens ist wasserunlöslich und hydrolysestabil. Letzteres ist von großer praktischer Bedeutung, da das beladene Sorbens damit in Deponien abgelagert werden kann, beispielsweise in unterirdischen abgebauten Lagerstätten.

Das erfindungsgemäße Verfahren kann also mit einem Reaktor beliebiger Größe durchgeführt werden, der normalerweise lediglich beheizbar zu sein braucht. Es ist damit ohne weiteres auch diskontinuierlich und dezentral durchführbar, z.B. im Rahmen der kommunalen Abfallbeseitigung.

Das erfindungsgemäße Verfahren ist in erster Linie zur Entsorgung von halogenierten Kohlenwasserstoffen bestimmt, und zwar von Fluorkohlenwasserstoffen (FKW), Chlorkohlenwasserstoffen (CKW), Chlorfluorkohlenwasserstoffen (FCKW), Bromfluorkohlenwasserstoffen, Bromchlorfluorkohlenwasserstoffen sowie teilhalogenierten Fluorkohlenwasserstoffen und Chlorfluorkohlenwasserstoffen geeignet, welche 1 bis 4 Kohlenwasserstoffe besitzen, insbesondere Trichlorfluormethan, Dichlordifluormethan, Bromchlordifluormethan, Dibromdifluormethan, Chlortrifluormethan, Bromtrifluormethan, Tetrafluormethan, Dichlorfluormethan, Chlordifluormethan, Trifluormethan (Fluoroform), Difluormethan (Methylenfluorid), 1,1,2,2-Tetrachlordifluorethan, 1,1,2-Trichlortrifluorethan, 1,2-Dichlortetrafluorethan, 1,2-Dibromtetrafluorethan, Chlorpentafluorethan, Hexafluorethan, 1,2-Dibrom-1,1-difluorethan, 2-Chlor-1,1,1-trifluorethan, 1-Chlor-1,1-difluorethan, 1,1,1-Trifluorethan, 1,1-Difluorethan, Octafluorpropan, Octafluorcyclobutan, Decafluorbutan, 1,1-Dichlordifluorethylen, Chlortrifluorethylen (Trifluorvinylchlorid), 1-Chlor-2,2-difluorethylen, 1,1-Difluorethylen (Vinylidenfluorid), Tetrachlorkohlenstoff, Methylchloroform.

Das erfindungsgemäße Verfahren ist aber nicht nur zur Entsorgung von FCKW, FKW und CKW geeignet, sondern auch für Halone, wie Halon 1211, 1301 oder 2402, oder teilhalogenierte Halone. Darüberhinaus können damit NF₃ und SF₆ entsorgt werden.

Die nachstehenden Beispiele dienen der weiteren Erläuterung der Erfindung.

### Beispiel 1

Es wird ein Ton-Mineral folgender Zusammensetzung (Gew.%) verwendet:

| | |
|---|---|
| Fe₂O₃ | 53,42% |
| SiO₂ | 22,85% |
| CaO | 8,07% |
| MnO | 6,24% |
| SO₃ | 6,03% |
| MgO | 1,26% |
| Al₂O₃ | 0,77% |
| sowie Spuren an Na₂O, TiO₂, ZnO, P₂O₅, V₂O₅, K₂O, CoO, SrO, As₂O₃, B, Li | |

und mit folgenden Phasen:
Montmorillonit
Goethit
Ferrihydrit
   und in Spuren
Hämatit und Maghemit.

Der Wassergehalt des Ton-Minerals beträgt 14 Gew.%, die Löslichkeit in Wasser 4,23 Gew.%, die spezifische Oberfläche (BET) 162,6 m²/g. Der pH-Wert in einer 10%igen wäßrigen Lösung beträgt 7,65.

Ein Festbett-Mikroreaktor wird mit diesem Ton-Material gefüllt. Dem Mikroreaktor wird Chlorpentafluorethan (C₂ClF₅) zugeführt, welches nach DIN 8262 als R115 bezeichnet wird. Als Trägergas wird Stickstoff eingesetzt. Die Konzentration von R115 beträgt 1000 vpm (1000 Volumenteile R115 pro 1 Million Volumenteile Gas). Die Raumgeschwindigkeit beträgt 708 h⁻¹. Die Temperatur des Reaktors wird von Raumtemperatur auf 350°C erhöht. Der Gesamtmassefluß beträgt 54,05 sccm (Standard-cm³). Die Gaszusammensetzung der aus dem Reaktor austretenden Effluenten wird mit einem Massenspektrometer bestimmt.

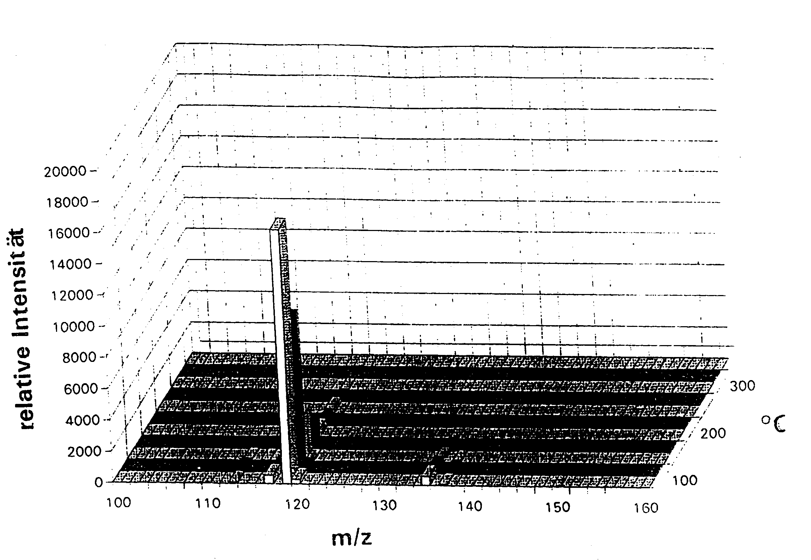

In der beigefügten Figur ist das mit dem Massenspektrometer erhaltene Diagramm in dreidimensionaler Darstellung wiedergegeben. Dabei stellt die y-Achse die relative Intensität, d.h. die Konzentration der mit dem Massenspektrometer gemessenen Bruchstücke, die x-Achse die Molmasse der Bruchstücke und die z-Achse die Temperatur des Reaktors dar.

Chlorpentafluorethan (Masse 154/156) zerfällt im Massenspektrometer hauptsächlich zu Pentafluorethan (C₂F₅) mit der Masse 119. Der 119-Peak in dem Diagramm zeigt damit die Adsorption von R115 im Mikroreaktor an. Es ist ersichtlich, daß die Adsorption von R115 im Mikroreaktor bereits bei 100°C einsetzt und bei 300°C quantitativ ist.

Die Adsorption erfolgt dann solange quantitativ, bis die Beladungskapazität des Sorbens erreicht ist. Während der Adsorption - auch nach Sättigung des Sorbens - entstehen keine Bruchstücke oder Reaktionsprodukte des R115 mit dem Sorbens, jedenfalls keine, die nicht vom Sorbens irreversibel gebunden werden.

Bei Erhöhung der Temperatur im untersuchten Temperaturbereich bis 350°C wird kein R115 desorbiert, auch keine Bruchstücke davon oder andere aggressive oder schädliche Gase.

### Beispiel 2

Ein Festbett-Mikroreaktor wird mit einem im Handel erhältlichen säureaktivierten Bentonit gefüllt, der eine geringe Menge Eisenoxid enthält. Dem Mikroreaktor wird Tetrafluormethan (CF₄) zugeführt, welches nach der DIN-Notation als R14 bezeichnet wird. Als Trägergas wird Stickstoff eingesetzt. Die CF₄-Konzentration beträgt 3,7 Vol.-%.

Bei einer Temperatur von 290 bis 350°C wird eine quantitative Adsorption von CF₄ bis zum Erreichen der Beladungskapazität festgestellt.

## Patentansprüche

1. Verfahren zur Entsorgung von ozonabbauenden (ODP) und/oder klimawirksamen (GWP) halogenierten Verbindungen aus der Gruppe: Fluorkohlenwasserstoffe, Chlorkohlenwasserstoffe, Fluorchlorkohlenwasserstoffe, Bromfluorkohlenwasserstoffe, Bromchlorfluorkohlenwasserstoffe sowie teilhalogenierten Fluorkohlenwasserstoffen und Chlorfluorkohlenwasserstoffen mit eins bis vier Kohlenstoffatomen, Halone, Stickstofftrifluorid und Schwefelhexafluorid, dadurch gekennzeichnet, daß die halogenierten Verbindungen in Dampfform durch ein festes, auf mindestens 100°C erwärmtes Sorbens geleitet werden, welches ein Phyllosilikat in einem Anteil von mindestens 10 Gew.-% sowie ein Eisenoxid, Eisenoxyhydroxid, Eisenhydroxysalz und/oder Eisenoxyhydroxysalz enthält.

2. Verfahren nach Anspruch 1, dadurch gekennzeichnet, dass das Eisenoxyhydroxid Goethit und das Eisenoxid Maghemit, Magnetit, Ferrihydrit oder Hämatit ist.

3. Verfahren nach Anspruch 1 oder 2, dadurch gekennzeichnet, dass das Eisen in dem Eisenoxid und/oder Eisenoxyhydroxid teilweise durch ein Metall oder Gruppe IIIa, IIb, IVb, VIIb und/oder VIIIb des Periodensystems ausgetauscht ist.

4. Verfahren nach Anspruch 1 dadurch gekennzeichnet, dass als Phyllosilikat ein Mineral der Montmorin-Gruppe, Talk und/oder ein Mineral der Glimmer-Gruppe verwendet wird.

5. Verfahren nach einem der vorstehenden Ansprüche, dadurch gekennzeichnet, dass das Sorbens bis zu 30 Gew-% eines Sulfats und/oder Carbonats eines Metalls der Gruppe Ia, Iia und/oder IIIa des Periodensystems und/oder als tertiäres Ammoniumsalz enthält.

6. Verfahren nach einem der vorstehenden Ansprüche, dadurch gekennzeichnet, dass das feste Sorbens auf eine Temperatur von mindestens 200°C erwärmt wird.

## Claims

1. A method for disposing of ozone-degrading (ODP) and/or climatically active (GWP) halogenated compounds of the group: fluorocarbons, chlorocarbons, chlorofluorohydrocarbons, bromofluorohydrocarbons, bromochlorofluorohydrocarbons and partly halogenated fluorocarbons and chlorofluorohydrocarbons which have one to four carbons, halons, nitrogen trifluoride, and sulfur hexafluoride characterized in that the halogenated compounds are passed in the form of vapor through a solid sorbent heated to at least 100°C and containing a phyllosilicate in a proportion of at least 10% by weight, and an iron oxide, iron oxyhydroxide, iron hydroxy salt and/or iron oxyhydroxy salt.

2. The method of claim 1, characterized in that the iron oxyhydroxide is goethite and the iron oxide maghemite, magnetite, ferrihydrite or hematite.

3. The method of claim 1 or 2, characterized in that the iron in the iron oxide and/or iron oxyhydroxide is partly replaced by a metal from group IIIa, IIb, IVb, VIIb and/or VIIIb of the periodic system.

4. The method of claim 1, characterized in that the phyllosilicate used is a mineral from the Montmorin group, talc and/or a mineral from the mica group.

5. The method of any of the above claims, characterized in that the sorbent contains up to 30% by weight of a sulfate and/or carbonate of a metal from group Ia, IIa and/or IIIa of the periodic system and/or a tertiary ammonium salt.

6. The method of any of the above claims, characterized in that the solid sorbent is heated to a temperature of at least 200°C.

## Revendications

1. Procédé d'élimination de composés halogénés dégradart l'ozone (ODP) et/ou agissant sur le climat (GWP), provenant du groupe : des hydrocarbures fluorés, des hydrocarbures chlorés, des hydrocarbures chlorofluorés, des bromures d'hydrocarbures fluorés, des bromures d'hydrocarbures chlorofluorés ainsi que des hydrocarbures fluorés et hydrocarbures chlorofluorés partiellement halogénés avec un à quatre atomes de carbone, des halons, du trifluorure d'azote et de l'hexafluorure de soufre, caractérisé en ce que les composés halogénés sont amenées sous forme de vapeur par un sorbant solide chauffé à au moins 100°C, lequel contient un phyllosilicate dans un pourcentrage en poids d'au moins 10 % ainsi qu'un oxyde de fer, un oxyhydroxyde de fer, un sel hydroxylique de fer et/ou un sel oxyhydroxylique de fer.

2. Procédé selon la revendication 1, caractérisé en ce que l'oxyhydroxide de fer est de la goethite et l'oxyde de fer est de la maghémite, de la magnétite, de l'hydrure ferrique ou de l'hamémite.

3. Procédé selon la revendication 1 ou 2, caractérisé en ce que le fer est remplacé dans l'oxyde de fer et/ou dans l'oxyhydroxyde de fer partiellement par un métal du groupe IIIa, IIb, IVb, VIIb et/ou VIIIb du système périodique.

4. Procédé selon la revendication 1, caractérisé en ce qu'on utilise en tant que phyllosilicate un minéral du groupe Montmorin, du talc et/ou un minéral du groupe des micas.

5. Procédé selon l'une quelconque des revendications précédentes, caractérisé en ce que le sorbant contient jusqu'à 30 % en poids d'un sulfate et/ou d'un carbonate d'un métal du groupe Ia, IIa et/ou IIIa du système périodique et/ou un sel d'ammonium tertiaire.

6. Procédé selon l'une quelconque des revendications précédentes, caractérisé en ce que le sorbant solide est chauffé à une température d'au moins 200°C.
